# EUROPÄISCHE PATENTANMELDUNG

(11) **EP 4 596 816 A1**
(43) Veröffentlichungstag der Anmeldung: **06.08.2025**
(21) Anmeldenummer: 24219354.8
(22) Anmeldetag: 12.12.2024
(51) Int. Cl.: E05B 17/06, B62D 65/02, E05B 79/06, E05B 85/10, E05B 17/00

(54) **AUSRICHTVORRICHTUNG, GRIFFBAUGRUPPE UND MONTAGEVERFAHREN**

(30) Priorität: 30.01.2024 DE 102024200811
(71) Anmelder: Volkswagen Aktiengesellschaft, 38440 Wolfsburg (DE)
(72) Erfinder: Kurth, Markus, 38448 Wolfsburg (DE)

(57) **Zusammenfassung**

Die vorliegende Erfindung betrifft eine Ausrichtvorrichtung (1) zum Ausrichten eines ersten Bauteils (2) in einer Ausnehmung (3) eines zweiten Bauteils (4) eines Kraftfahrzeugs, aufweisend einen Grundkörper (5) mit einer Grundkörperinnenseite (6) zum formschlüssigen Umfassen eines Abschnitts des ersten Bauteils (2) und einer Grundkörperaußenseite (7). An der Grundkörperaußenseite (7) sind mehrere Zentriervorrichtungen (8) angeordnet, wobei die Zentriervorrichtungen (8) eine Zentriergeometrie (9) zum derartigen Kontaktieren einer Ausnehmungsinnenseite (10) der Ausnehmung (3) aufweisen und dass durch ein lineares Aufschieben der Ausrichtvorrichtung (1) auf das erste Bauteil (2) über die Zentriervorrichtungen (8) eine Relativbewegung zwischen dem ersten Bauteil (2) und dem zweiten Bauteil (4) zum Ausrichten des ersten Bauteils (2) zum zweiten Bauteil (4) bewirkbar ist. Ferner betrifft die Erfindung eine Griffbaugruppe (11) für ein Kraftfahrzeug sowie ein Verfahren zum Montieren eines Türgriffs (12) an einer Fahrzeugtür (14) für ein Kraftfahrzeug.

## Beschreibung

Die vorliegende Erfindung betrifft eine Ausrichtvorrichtung zum Ausrichten eines ersten Bauteils in einer Ausnehmung eines zweiten Bauteils eines Kraftfahrzeugs. Ferner betrifft die Erfindung eine Griffbaugruppe für ein Kraftfahrzeug sowie ein Verfahren zum Montieren eines Türgriffs an einer Fahrzeugtür für ein Kraftfahrzeug.

Es sind unterschiedliche Betriebsmittel zum Montieren von Türgriffmodulen mit einem versteckten Türgriff sowie einer Türgriffmechanik an einer Griffausnehmung eines Türblechs einer Fahrzeugtür eines Kraftfahrzeugs bekannt. Derartige Ausrichtvorrichtungen weisen beispielsweise eine Abdeckplatte zum Abdecken des Türgriffs sowie mehrere senkrecht von der Abdeckplatte abstehende, einstückig mit der Abdeckplatte ausgebildete, flexible Zentrierstifte auf, über welche die Abdeckplatte an einer Sichtseite des Türgriffs lagegenau anordenbar ist. Über die Zentrierstifte ist zudem eine Dichtungsvorrichtung um den Türgriff herum in definierter Lage unter Ausbildung eines Spalts anordenbar. In diesem Zustand ist das Türgriffmodul von einer Fahrzeugtürinnenseite der Fahrzeugtür durch die Griffausnehmung durchführbar und unter Beibehaltung eines Spalts lagegenau am Türblech anordenbar sowie an diesem fixierbar, beispielsweise über Schrauben. Anschließend ist die Ausrichtvorrichtung von einer Fahrzeugtüraußenseite der Fahrzeugtür abnehmbar. Eine derartige Ausrichtvorrichtung ist beispielsweise aus den Dokumenten CN 106 499 272 B sowie CN 110 485 838 A bekannt.

Das Dokument WO 2023 / 158 025 A1 offenbart eine Griffbaugruppe für ein Kraftfahrzeug, bei welchem eine Ausrichtvorrichtung für einen Montagevorgang auf einem Türgriff angeordnet ist und diesen von einer Griffaußenseite abdeckt. Der Türgriff ist an einer Griffdurchführung eines Türblechs anordenbar und beim Heranbewegen über die Ausrichtvorrichtung am Türblech ausrichtbar. Nach Befestigen der Griffbaugruppe am Türblech ist die Führungsabdeckung entfernbar. Durch die Führungsabdeckung ist ein gleichmäßig ausgebildeter Spalt zwischen dem Türgriff und dem Türblech gewährleistet.

Aus dem Dokument CN 114 278 168 A ist eine Griffbaugruppe mit einer an einem Griffrahmen gehaltenen Griffabdeckung bekannt. Über eine Vielzahl von in die Griffbaugruppe integrierten, kleinen Ausrichtelementen ist eine definierte mehrachsige Ausrichtung der Komponenten beim Zusammensetzen sowie bei der Montage in einer Griffdurchführung eines Türblechs unterstützt.

Das Dokument EP 4 023 846 A1 offenbart eine Griffbaugruppe, bei welcher ein Toleranzausgleich zwischen Befestigungslöchern und Befestigungsbolzen über eine integrierte Ausrichtvorrichtung gewährleistet ist.

Bekannte Griffbaugruppen haben den Nachteil, dass eine Ausrichtung der Bauteile weiterhin sehr aufwendig ist und eine genaue manuelle Positionierung der zu fügenden Bauteile erforderlich ist. Bei flexibel ausgebildeten Ausrichtvorrichtungen können die mitunter sehr filigran ausgebildeten Zentriervorrichtungen leicht verbiegen und sind daher nur bedingt wiederverwendbar. In die Bauteile integrierte Ausrichtvorrichtungen erhöhen das Bauteilgewicht und somit die Herstellungskosten der Bauteile.

Es ist daher Aufgabe der vorliegenden Erfindung, die voranstehend beschriebenen Nachteile bei einer Ausrichtvorrichtung zum Ausrichten eines ersten Bauteils in einer Ausnehmung eines zweiten Bauteils eines Kraftfahrzeugs zu beheben oder zumindest teilweise zu beheben. Insbesondere ist es Aufgabe der vorliegenden Erfindung, eine Ausrichtvorrichtung, eine Griffbaugruppe für ein Kraftfahrzeug und ein Verfahren zum Montieren eines Türgriffs an einer Fahrzeugtür für ein Kraftfahrzeug zu schaffen, die auf eine einfache und kostengünstige Art und Weise ein sicheres Ausrichten der Bauteile gewährleisten und/oder einen reduzierten Materialaufwand erfordern.

Die voranstehende Aufgabe wird durch die Patentansprüche gelöst. Demnach wird die Aufgabe durch eine Ausrichtvorrichtung zum Ausrichten eines ersten Bauteils in einer Ausnehmung eines zweiten Bauteils eines Kraftfahrzeugs mit den Merkmalen des unabhängigen Anspruchs 1, durch eine Griffbaugruppe für ein Kraftfahrzeug mit den Merkmalen des nebengeordneten Anspruchs 8 sowie durch ein Verfahren zum Montieren eines Türgriffs an einer Fahrzeugtür für ein Kraftfahrzeug mit den Merkmalen des nebengeordneten Anspruchs 10 gelöst. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Ausrichtvorrichtung beschrieben sind, selbstverständlich auch im Zusammenhang mit der erfindungsgemäßen Griffbaugruppe sowie dem erfindungsgemäßen Verfahren und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch eine Ausrichtvorrichtung zum Ausrichten eines ersten Bauteils in einer Ausnehmung eines zweiten Bauteils eines Kraftfahrzeugs gelöst. Die Ausrichtvorrichtung weist einen Grundkörper mit einer Grundkörperinnenseite zum formschlüssigen Umfassen eines Abschnitts des ersten Bauteils und einer Grundkörperaußenseite auf. Erfindungsgemäß sind an der Grundkörperaußenseite mehrere Zentriervorrichtungen angeordnet. Die Zentriervorrichtungen weisen eine Zentriergeometrie zum derartigen Kontaktieren einer Ausnehmungsinnenseite der Ausnehmung auf, dass durch ein lineares Aufschieben der Ausrichtvorrichtung auf das erste Bauteil über die Zentriervorrichtungen eine Relativbewegung zwischen dem ersten Bauteil und dem zweiten Bauteil zum Ausrichten des ersten Bauteils zum zweiten Bauteil bewirkbar ist.

Unter einer Ausrichtvorrichtung zum Ausrichten eines ersten Bauteils in einer Ausnehmung eines zweiten Bauteils wird im Rahmen der Erfindung eine Vorrichtung verstanden, die separat vom ersten Bauteil und vom zweiten Bauteil ausgebildet ist. Ferner ist die Ausrichtvorrichtung ausgebildet, eine relative Ausrichtung des ersten Bauteils und des zweiten Bauteils zu bewirken, wenn das erste Bauteil innerhalb einer vordefinierten relativen Ausgangslage zum zweiten Bauteil angeordnet ist und in diesem Zustand die Ausrichtvorrichtung auf das erste Bauteil aufgeschoben wird. Unter Aufschieben wird im Rahmen der Verbindung auch ein Aufdrücken, Aufpressen, Aufziehen oder dergleichen verstanden.

In der Ausgangslage ist ein Teil des ersten Bauteils derart in der Ausnehmung des zweiten Bauteils angeordnet, dass zwischen der Ausnehmungsinnenseite der Ausnehmung und dem ersten Bauteil ein umlaufender Spalt ausgebildet ist. Der umlaufende Spalt kann in dieser Ausgangslage innerhalb vorgegebener Toleranzen unterschiedliche Spaltbreiten aufweisen. Eine lokale Spaltbreite von 0 mm kann in Extremfällen vorkommen, vorzugsweise an einer Stelle des Spalts, an welcher keine Zentriervorrichtung vorgesehen ist. An solchen Stellen ist ein Aufschieben der Ausrichtvorrichtung auf das erste Bauteil erschwert, sodass derart enge Spaltbreiten bereits vor dem Aufsetzen der Ausrichtvorrichtung zu vermeiden sind. Erfindungsgemäß können das erste Bauteil und das zweite Bauteil derart ausgebildete Radien aufweisen, welche eine Montage bei einer lokalen Spaltbreite von 0mm vereinfachen. Vorzugsweise sind die Ausnehmung und das erste Bauteil derart ausgebildet, dass in einer relativen Endlage des ersten Bauteils zum zweiten Bauteil die Spaltbreite konstant ist. Somit ist es bevorzugt, dass die Form der Innenkontur der Ausnehmung der Form der Außenkontur des Teils des ersten Bauteils entspricht, wobei die Innenkontur geringfügig größer ist als die Außenkontur.

Die Ausrichtvorrichtung weist den Grundkörper auf. Der Grundkörper ist vorzugsweise zum formschlüssigen Aufschieben auf das erste Bauteil ausgebildet. Somit ist durch das Aufschieben der Ausrichtvorrichtung auf das erste Bauteil eine vordefinierte Lage der Ausrichtvorrichtung zum ersten Bauteil formschlüssig festgelegt. Die Grundkörperinnenseite des Grundkörpers weist vorzugsweise einen besonders niedrigen Reibkoeffizienten auf, um das Aufschieben zu verbessern und eine Beschädigung des ersten Bauteils beim Aufschieben der Ausrichtvorrichtung zu vermeiden. Der Grundkörper weist vorzugsweise eine Grundfläche auf, die einer Grundfläche des ersten Bauteils entspricht oder dieser zumindest angepasst ist. Die Grundkörperinnenseite kann erfindungsgemäß an einem vom Grundkörper abgewandten Endbereich eine Fase und/oder Rundung aufweisen, um ein zuverlässiges Umfassen des ersten Bauteils durch die Zentriervorrichtungen zu gewährleisten, sodass die Ausrichtvorrichtung mit dem ersten Bauteil in Eingriff gerät. Diese Fase und/oder Rundung ist vorzugsweise kleiner als die Zentriergeometrie ausgebildet. Alternativ kann auf eine Fase und/oder Rundung auch verzichtet werden.

Zum relativen Ausrichten des ersten Bauteils zum zweiten Bauteil weist die Ausrichtvorrichtung die Zentriervorrichtungen auf. Die Zentriervorrichtungen sind an der Grundkörperaußenseite des Grundkörpers angeordnet. Die Zentriervorrichtungen sind vorzugsweise über den Grundkörper verteilt angeordnet. Vorzugsweise sind die Zentriervorrichtungen an mehreren Flanken des Grundkörpers verteilt. Weiter bevorzugt sind die Zentriervorrichtungen an Endbereichen des Grundkörpers angeordnet, die ausgebildet sind, als erstes in den umlaufenden Spalt einzugreifen. Die Zentriergeometrie weist von dem Grundkörper weg und ist zum Kontaktieren der Innenfläche der Ausnehmung des zweiten Bauteils ausgebildet.

Weiter bevorzugt weist der Grundkörper auf der Grundkörperinnenseite einen Formschlussabschnitt auf, der ausgebildet ist, in einem aufgesetzten Zustand das erste Bauteil zu kontaktieren und somit ein weiteres relatives Bewegen der Ausrichtvorrichtung zum ersten Bauteil in eine Aufschieberichtung formschlüssig zu verhindern. Hierbei ist es weiter bevorzugt, dass der Grundkörper an der Grundkörperaußenseite und/oder einer oder mehrere der Zentriervorrichtungen einen zweiten Formschlussabschnitt aufweist, der ausgebildet ist, eine Relativbewegung der Ausrichtvorrichtung zum zweiten Bauteil formschlüssig zu begrenzen. Auf diese Weise ist auch ein gezieltes relatives Ausrichten des ersten Bauteils zum zweiten Bauteil in Aufschieberichtung der Ausrichtvorrichtung gewährleistbar.

Die Zentriervorrichtungen sind zum Eintauchen in den umlaufenden Spalt ausgebildet. Durch weiteres Aufschieben der Ausrichtvorrichtung auf das erste Bauteil, können die Zentriervorrichtungen weiter in den Spalt eintauchen. Hierbei ist über die Zentriergeometrie einer oder mehrerer der Zentriervorrichtungen eine Druckkraft auf das zweite Bauteil ausübbar, durch welche eine Ausrichtbewegung des ersten Bauteils zum zweiten Bauteil bewirkbar ist. Andere Zentriervorrichtungen sind in diesem Zustand von der benachbarten Ausnehmungsinnenseite beabstandet angeordnet. Der zwischen der Ausnehmungsinnenseite der Ausnehmung und dem ersten Bauteil ausgebildete Spalt ist somit gezielt veränderbar. Die Ausrichtvorrichtung ist zudem derart ausgebildet, dass der Spalt eine vordefinierte Soll-Ausbildung aufweist, wenn die Ausrichtvorrichtung in einer Endposition auf das erste Bauteil aufgeschoben ist. Die Ausrichtvorrichtung ist vorzugsweise vom ersten Bauteil abziehbar ausgebildet, wenn das erste Bauteil am zweiten Bauteil befestigt ist.

Eine erfindungsgemäße Ausrichtvorrichtung hat gegenüber herkömmlichen Ausrichtvorrichtungen den Vorteil, dass mit einfachen Mitteln sowie auf eine kostengünstige Art und Weise ein einfaches Ausrichten des ersten Bauteils zum zweiten Bauteil gewährleistet ist. Durch die Zentriergeometrie auf der Zentrieraußenseite ist ein mehrstufiges Ausrichten des ersten Bauteils zum zweiten Bauteil möglich, nämlich zunächst ein Grobausrichten ohne die Ausrichtvorrichtung durch Heranbewegen des ersten Bauteils an das zweite Bauteil in eine erste Richtung und ein Feinausrichten des ersten Bauteils mit dem zweiten Bauteil durch Heranführen der Ausrichtvorrichtung zum ersten Bauteil in eine der ersten Richtung entgegengesetzte zweite Richtung. Durch die Mehrstufigkeit der gemeinsamen Ausrichtung ist der Ausrichtvorgang leichter durchführbar und der Verschleiß an der Ausrichtvorrichtung gegenüber herkömmlichen Ausrichtvorrichtungen reduziert.

Gemäß einer bevorzugten Weiterentwicklung der Erfindung kann bei einer Ausrichtvorrichtung vorgesehen sein, dass die Zentriergeometrie eine Fase und/oder eine Rundung aufweist. Die Fase oder Rundung ist vorzugsweise derart ausgebildet, dass sich die Zentriervorrichtungen vom Grundkörper weg verjüngen. Somit ist eine Rampe bereitgestellt, über welche ein Abgleiten der Zentriervorrichtungen am zweiten Bauteil sowie eine Kraftübertragung zum Zentrieren des ersten Bauteils beim Aufschieben der Ausrichtvorrichtung gewährleistet ist. Eine manuelle Nachjustierung des ersten Bauteils zum zweiten Bauteil, um ein Aufschieben der Ausrichtvorrichtung auf das erste Bauteil zu verbessern ist somit durch die Zentriergeometrie ersetzt und demnach gegenüber bekannten Ausrichtvorrichtungen nicht mehr erforderlich. Dies hat den Vorteil, dass mit einfachen Mitteln sowie auf eine kostengünstige Art und Weise die Ausrichtung des ersten Bauteils zum zweiten Bauteil weiter verbessert ist.

Es ist erfindungsgemäß bevorzugt, dass die Ausrichtvorrichtung aus einem Kunststoff hergestellt ist. Als Kunststoff sind beispielsweise HDPE, PVC, PTFE, POM oder dergleichen bevorzugt. Derartige Kunststoffe sind gut verfügbar, lassen sich leicht herstellen, sind für komplexe Geometrien gut geeignet und weisen eine hohe Abriebsfestigkeit auf. Dies hat den Vorteil, dass mit einfachen Mitteln sowie auf eine kostengünstige Art und Weise eine Haltbarkeit und somit eine Wiederverwendbarkeit der Ausrichtvorrichtung verbessert ist.

Weiter bevorzugt ist die Ausrichtvorrichtung als steifes Bauteil ausgebildet. Unter einem steifen Bauteil wird im Rahmen der Erfindung ein Bauteil verstanden, bei welchem die Zentriervorrichtungen beim Zusammenfügen der Ausrichtvorrichtung auf das erste Bauteil auch durch die im Zusammenspiel mit dem zweiten Bauteil bewirkten Querkräfte formstabil bleiben und sich nicht wegbiegen oder abbrechen. Durch eine hohe Steifigkeit ist ein Anordnen der Ausrichtvorrichtung am ersten Bauteil verbesserbar, da eine Behinderung durch verbogene Zentriervorrichtungen auf diese Weise vermieden ist. Dies hat den Vorteil, dass mit einfachen Mitteln sowie auf eine kostengünstige Art und Weise die Ausrichtung des ersten Bauteils zum zweiten Bauteil weiter verbessert ist. Ferner ist durch eine steife Ausführung die Haltbarkeit und somit eine Wiederverwendbarkeit der Ausrichtvorrichtung verbessert.

In einer besonders bevorzugten Ausgestaltung der Erfindung kann bei einer Ausrichtvorrichtung vorgesehen sein, dass die Zentriervorrichtungen parallel zueinander vom Grundkörper abstehen. Unter einer parallelen Anordnung wird im Rahmen der Erfindung eine Ausrichtung in dieselbe Richtung, beispielsweise der Aufschieberichtung, verstanden. Im Rahmen der Erfindung kann es vorgesehen sein, dass die Zentriervorrichtungen von dieser Richtung derart geringfügig abweichen, beispielsweise um 0,5 ° oder 1 °, dass ein Einfangen des ersten Bauteils durch die Zentriervorrichtungen beim Heranbewegen der Ausrichtvorrichtung verbessert ist. Dies hat den Vorteil, dass mit einfachen Mitteln sowie auf eine kostengünstige Art und Weise die Ausrichtung des ersten Bauteils zum zweiten Bauteil weiter verbessert ist.

Vorzugsweise ist der Grundkörper napfförmig ausgebildet. Unter einer napfförmigen Ausbildung wird im Rahmen der Erfindung eine Ausbildung verstanden, bei welcher ein Napf oder eine Kappe durch Grundkörpermaterial gebildet ist, wobei die Kappe zum Umfassen des Abschnitts des ersten Bauteils ausgebildet ist. Der Napf kann geschlossen ausgebildet sein oder Freimachungen aufweisen. Erfindungsgemäß können Streben, Versteifungsrippen oder dergleichen vorgesehen sein, durch welche der Napf versteifbar ist. Die Streben sind vorzugsweise den Zentriervorrichtungen zugeordnet, beispielsweise als Verbindung gegenüberliegender Zentriervorrichtungen. Somit ist eine Haltbarkeit der Ausrichtvorrichtung weiter verbessert. Durch Freimachungen ist Material zur Herstellung der Ausrichtvorrichtung einsparbar, sodass die Herstellungskosten und das Gewicht der Ausrichtvorrichtung reduziert sind. Die Freimachungen haben den Vorteil, dass der Montagewerker durch bessere Einsicht die Ausrichtvorrichtung schneller und einfacher positionieren kann. Überdies können die Freimachungen auch verhindern, dass die Ausrichtvorrichtung falsch herum verwendet wird, beispielsweise um 180°. Alternativ oder zusätzlich kann auch eine Beschriftung oder dergleichen vorgesehen sein, durch welche die richtige Orientierung vorgegeben ist, wie beispielsweise "L / R", "Top / Bottom" oder dergleichen. Dies hat den Vorteil, dass mit einfachen Mitteln sowie auf eine kostengünstige Art und Weise die Ausrichtung des ersten Bauteils zum zweiten Bauteil weiter verbessert ist.

Gemäß einer bevorzugten Ausführungsform der Erfindung kann bei einer Ausrichtvorrichtung vorgesehen sein, dass an dem Grundkörper eine Haltevorrichtung zum Halten der Ausrichtvorrichtung sowie zum Wegziehen der Ausrichtvorrichtung von dem am zweiten Bauteil befestigten ersten Bauteil angeordnet ist. Die Haltevorrichtung kann beispielsweise stift- oder säulenförmig ausgebildet sein. Alternativ kann die Haltevorrichtung flügelförmig oder T-förmig ausgebildet sein. Eine Oberfläche der Haltevorrichtung ist vorzugsweise rutschhemmend ausgebildet, beispielsweise durch eine Maserung oder Strukturierung. Die Haltevorrichtung weist vorzugsweise eine Haltekante zum Hintergreifen auf, sodass ein Abrutschen beim Herausziehen der Ausrichtvorrichtung besser vermieden ist. Dies hat den Vorteil, dass mit einfachen Mitteln sowie auf eine kostengünstige Art und Weise die Ausrichtung des ersten Bauteils zum zweiten Bauteil weiter verbessert ist. Ferner ist durch die Haltevorrichtung das Entfernen der Ausrichtvorrichtung vom ersten Bauteil und zweiten Bauteil erleichtert.

Gemäß einem zweiten Aspekt der Erfindung wird die Aufgabe durch eine Griffbaugruppe für ein Kraftfahrzeug gelöst. Die Griffbaugruppe weist einen als Teil eines ersten Bauteils ausgebildeten Türgriff auf, wobei der Türgriff an einer Türgriffmechanik des ersten Bauteils bewegbar gehalten ist. Der Türgriff ist zur Anordnung in einer Ausnehmung einer als zweites Bauteil ausgebildeten Fahrzeugtür des Kraftfahrzeugs unter Ausbildung eines umlaufenden Spalts zwischen dem Türgriff und einer Ausnehmungsinnenseite der Ausnehmung ausgebildet. Erfindungsgemäß weist die Griffbaugruppe eine erfindungsgemäße Ausrichtvorrichtung auf.

Die Griffbaugruppe weist die Türgriffmechanik auf, die über Befestigungsvorrichtungen, wie beispielsweise Schrauben, Bolzen, Niete oder dergleichen, an der Fahrzeugtür befestigbar ist. Der Türgriff ist an der Türgriffmechanik befestigt und über die Türgriffmechanik bewegbar gehalten, sodass die Türgriffmechanik über den Fahrzeuggriff betätigbar ist. Vorzugsweise ist der Türgriff über die Türgriffmechanik gezielt zwischen einer versteckten Position, in welcher der Türgriff fluchtend zur Ausnehmung der Fahrzeugtür angeordnet ist, und einer herausgefahrenen Position, in welcher der Türgriff zur Fahrzeugtüraußenseite aus der Ausnehmung vorsteht, beispielsweise zur besseren Betätigbarkeit des Türgriffs durch einen Benutzer der Fahrzeugtür, bewegbar ausgebildet. Gemäß dem zweiten Aspekt der Erfindung sind der Türgriff und die Türgriffmechanik als das erste Bauteil ausgebildet. Die Fahrzeugtür ist als das zweite Bauteil ausgebildet.

Die Ausnehmung und der Türgriff sind vorzugsweise derart ausgebildet, dass zwischen der Ausnehmungsinnenseite der Ausnehmung und dem Türgriff ein umlaufender Spalt mit konstanter Spaltbreite ausbildbar ist. Die Ausrichtvorrichtung ist ausgebildet, beim Aufschieben auf das in der Ausnehmung des zweiten Bauteils angeordnete erste Bauteil das erste Bauteil und das zweite Bauteil derart auszurichten, dass ein vordefinierter Spalt zwischen dem ersten Bauteil und dem zweiten Bauteil, beispielsweise mit konstanter Spaltbreite, gewährleistet ist. In der ausgerichteten Position ist die Türgriffmechanik anschließend an der Fahrzeugtür fixierbar. Auf diese Weise ist sichergestellt, dass zwischen dem Türgriff und der Fahrzeugtür ein vordefinierter Spalt vorhanden ist.

Bei der erfindungsgemäßen Griffbaugruppe ergeben sich sämtliche Vorteile, die bereits zu einer Ausrichtvorrichtung zum Ausrichten eines ersten Bauteils in einer Ausnehmung eines zweiten Bauteils eines Kraftfahrzeugs gemäß dem ersten Aspekt der Erfindung beschrieben worden sind. Demnach hat die erfindungsgemäße Griffbaugruppe gegenüber herkömmlichen Griffbaugruppen den Vorteil, dass mit einfachen Mitteln sowie auf eine kostengünstige Art und Weise ein einfaches Ausrichten des ersten Bauteils zum zweiten Bauteil gewährleistet ist. Durch die Zentriergeometrie auf der Zentrieraußenseite ist ein mehrstufiges Ausrichten des ersten Bauteils zum zweiten Bauteil möglich, nämlich zunächst ein Grobausrichten ohne die Ausrichtvorrichtung durch Heranbewegen des ersten Bauteils an das zweite Bauteil in eine erste Richtung und ein Feinausrichten des ersten Bauteils mit dem zweiten Bauteil durch Heranführen der Ausrichtvorrichtung zum ersten Bauteil in eine der ersten Richtung entgegengesetzte zweite Richtung. Durch die Mehrstufigkeit der gemeinsamen Ausrichtung ist der Ausrichtvorgang leichter durchführbar und der Verschleiß an der Ausrichtvorrichtung gegenüber herkömmlichen Ausrichtvorrichtungen reduziert.

Es ist erfindungsgemäß bevorzugt, dass der Türgriff und die Fahrzeugtür derart ausgebildet sind, dass eine Griffaußenseite des Türgriffs im eingebauten Zustand fluchtend zu einer Außenfläche der Fahrzeugtür angeordnet ist. Eine solche Position kann auch als versteckte Position bezeichnet werden. In dieser Position ist eine Luftströmung entlang der Fahrzeugtür vorzugsweise lediglich durch den zwischen dem Türgriff und dem Türblech der Fahrzeugtür ausgebildeten Spalt beeinflusst. Die Ausrichtvorrichtung ist vorzugsweise ausgebildet, im aufgesetzten Zustand den Spalt zwischen dem Türgriff und dem Türblech zu überragen und somit eine derartige Ausrichtung von Türgriff und Türblech während der Montage formschlüssig bereitzustellen. Weiter bevorzugt sind der Türgriff, die Ausnehmung und die Ausrichtvorrichtung derart ausgebildet, dass im ausgerichteten Zustand der umlaufende Spalt eine konstante Spaltbreite aufweist. Dies hat den Vorteil, dass mit einfachen Mitteln sowie auf eine kostengünstige Art und Weise eine aerodynamisch besonders vorteilhafte Griffbaugruppe bereitgestellt ist, die bei der Montage an der Fahrzeugtür mit einer erfindungsgemäßen Ausrichtvorrichtung besonders zuverlässig ausrichtbar ist.

Gemäß einem dritten Aspekt der Erfindung wird die Aufgabe durch ein Verfahren zum Montieren eines Türgriffs an einer Fahrzeugtür für ein Kraftfahrzeug gelöst. Das Verfahren weist auf:
- Bereitstellen einer Fahrzeugtür mit einer Ausnehmung für den Türgriff,
- Heranbewegen einer Türgriffmechanik mit dem an der Türgriffmechanik gehaltenen Türgriff von einer Fahrzeugtürinnenseite der Fahrzeugtür zur Ausnehmung derart, dass der Türgriff in die Ausnehmung ragt,
- Heranbewegen einer Ausrichtvorrichtung nach einem der Ansprüche 1 bis 7 von einer Fahrzeugtüraußenseite der Fahrzeugtür zum Türgriff derart, dass die Ausrichtvorrichtung den Türgriff umfasst,
- weiteres Heranbewegen der Ausrichtvorrichtung zum Türgriff derart, dass die Zentriergeometrien der Zentriervorrichtungen den Türgriff zur Fahrzeugtür ausrichten,
- Befestigen der Türgriffmechanik an der Fahrzeugtür, und
- Entfernen der Ausrichtvorrichtung über die Fahrzeugtüraußenseite der Fahrzeugtür.

Zunächst wird die Fahrzeugtür mit der Ausnehmung für den Türgriff bereitgestellt. Die Fahrzeugtür weist vorzugsweise ein Türblech auf, in welchem die Ausnehmung ausgebildet ist. Die Fahrzeugtür weist eine Fahrzeugtürinnenseite und eine Fahrzeugtüraußenseite auf. Die Türgriffmechanik wird bereitgestellt und von der Fahrzeugtürinnenseite an die Fahrzeugtür heranbewegt, vorzugsweise bis die Türgriffmechanik die Fahrzeugtür kontaktiert. Hierbei wird der an der Türgriffmechanik gehaltene Türgriff in die Ausnehmung bewegt. Vorzugsweise wird hierbei eine Griffaußenseite des Türgriffs fluchtend zu einer Außenfläche der Fahrzeugtür angeordnet. Alternativ kann die Griffaußenseite auf der Fahrzeugtüraußenseite aus der Ausnehmung herausragen. Zwischen dem Türgriff und einer Ausnehmungsinnenseite der Ausnehmung ist ein umlaufender Spalt ausgebildet, der unterschiedliche Spaltbreiten aufweisen kann. In diesem Zustand ist der Türgriff in einer Ausgangslage zur Fahrzeugtür angeordnet. Weiter bevorzugt wird die Türgriffmechanik mit am Türblech vorläufig fixiert, beispielsweise durch Clipsen oder dergleichen, um ein herunterfallen während des Ausrichtvorgangs zu verhindern. Die Clipse weisen dabei so viel Spiel auf, dass der Türgriff innerhalb der Ausnehmung verschiebbar ist.

Anschließend wird die erfindungsgemäße Ausrichtvorrichtung von der Fahrzeugtüraußenseite derart an den Türgriff heranbewegt, dass die Ausrichtvorrichtung den Türgriff umfasst. Vorzugsweise umfasst hierbei der Grundkörper der Ausrichtvorrichtung den Türgriff, vorzugsweise derart, dass eine Grundkörperinnenseite des Grundkörpers den Türgriff, vorzugsweise flächig, kontaktiert. Hierbei können bereits einige der Zentriervorrichtungen die Ausnehmungsinnenseite kontaktieren. Die übrigen Zentriervorrichtungen sind vorzugsweise von der Ausnehmungsinnenseite beabstandet angeordnet. Durch weiteres Heranbewegen der Ausrichtvorrichtung zum Türgriff werden die Zentriervorrichtungen weiter entlang der Ausnehmungsinnenseite bewegt. Geometriebedingt wird beim weiteren Bewegen der Ausrichtvorrichtung in die Aufschieberichtung über die Ausrichtvorrichtung eine Querkraft zwischen der Fahrzeugtür und dem Türgriff bewirkt. Durch diese Querkraft wird der Türgriff innerhalb der Ausnehmung ausgerichtet. Vorzugsweise sind die Ausrichtvorrichtung, der Türgriff und die Ausnehmung derart ausgebildet, dass der umlaufende Spalt im ausgerichteten Zustand eine konstante Spaltbreite aufweist. In einem bevorzugten Fall beträgt der Spalt links und rechts 2,5 mm sowie oben und unten 2,0 mm.

In dem ausgerichteten Zustand wird die Türgriffmechanik, beispielsweise ein Gehäuse oder ein Flansch der Türgriffmechanik, an der Fahrzeugtürinnenseite der Fahrzeugtür befestigt, beispielsweise über Schrauben, Bolzen, Niete oder dergleichen. Auf diese Weise ist eine ungewollte Veränderung der Ausrichtung des Türgriffs zur Fahrzeugtür, abgesehen von einer durch eine Betätigung der Türgriffmechanik bewirkbaren Lageveränderung des Türgriffs zur Fahrzeugtür, vermieden. Schließlich wird die Ausrichtvorrichtung über die Fahrzeugtüraußenseite der Fahrzeugtür entfernt.

Bei dem erfindungsgemäßen Verfahren ergeben sich sämtliche Vorteile, die bereits zu einer Ausrichtvorrichtung zum Ausrichten eines ersten Bauteils in einer Ausnehmung eines zweiten Bauteils eines Kraftfahrzeugs gemäß dem ersten Aspekt der Erfindung sowie zu einer Griffbaugruppe für ein Kraftfahrzeug gemäß dem zweiten Aspekt der Erfindung beschrieben worden sind. Demnach hat das erfindungsgemäße Verfahren gegenüber herkömmlichen Verfahren den Vorteil, dass mit einfachen Mitteln sowie auf eine kostengünstige Art und Weise ein einfaches Ausrichten des ersten Bauteils zum zweiten Bauteil gewährleistet ist. Durch die Zentriergeometrie auf der Zentrieraußenseite ist ein mehrstufiges Ausrichten des ersten Bauteils zum zweiten Bauteil möglich, nämlich zunächst ein Grobausrichten ohne die Ausrichtvorrichtung durch Heranbewegen des ersten Bauteils an das zweite Bauteil in eine erste Richtung und ein Feinausrichten des ersten Bauteils mit dem zweiten Bauteil durch Heranführen der Ausrichtvorrichtung zum ersten Bauteil in eine der ersten Richtung entgegengesetzte zweite Richtung. Durch die Mehrstufigkeit der gemeinsamen Ausrichtung ist der Ausrichtvorgang leichter durchführbar und der Verschleiß an der Ausrichtvorrichtung gegenüber herkömmlichen Ausrichtvorrichtungen reduziert. Ferner kann das erste Bauteil auch im Nachhinein, beispielsweise bei qualitätssicherungsbedingter Nacharbeit oder nach Reparaturarbeiten in einer Werkstatt, einfach nachjustiert werden, ohne dass das erste Bauteil vollständig ausgebaut werden muss.

Eine erfindungsgemäße Ausrichtvorrichtung, eine erfindungsgemäße Griffbaugruppe sowie ein erfindungsgemäßes Verfahren werden nachfolgend anhand von Zeichnungen näher erläutert. Es zeigen jeweils schematisch:
- Figur 1: in einer perspektivischen Ansicht eine Griffbaugruppe gemäß einer bevorzugten Ausführungsform,
- Figur 2: in einer Frontalansicht die Griffbaugruppe aus Figur 1,
- Figur 3: in einer Schnittdarstellung die Griffbaugruppe aus Figur 2, und
- Figur 4: in einem Ablaufdiagramm eine bevorzugte Ausführungsform eines erfindungsgemäßen Verfahrens.

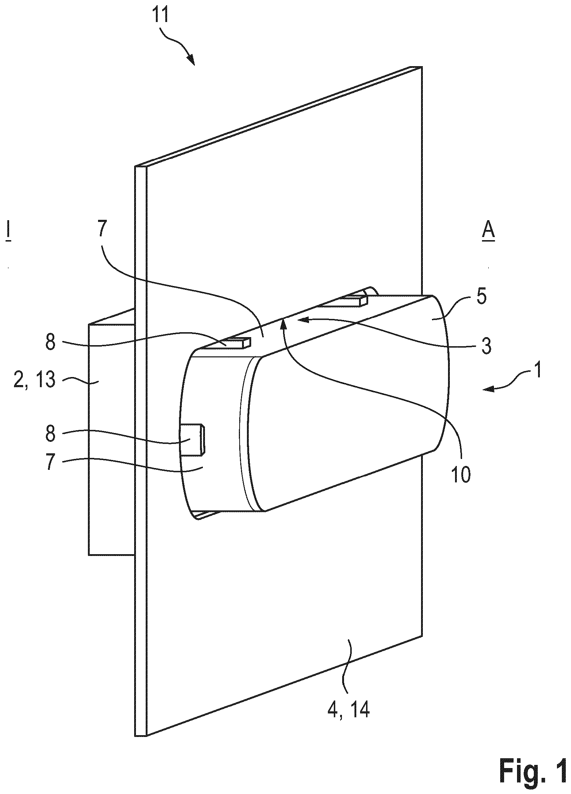

Elemente mit gleicher Funktion und Wirkungsweise sind in den Figuren 1 bis 4 jeweils mit denselben Bezugszeichen versehen.

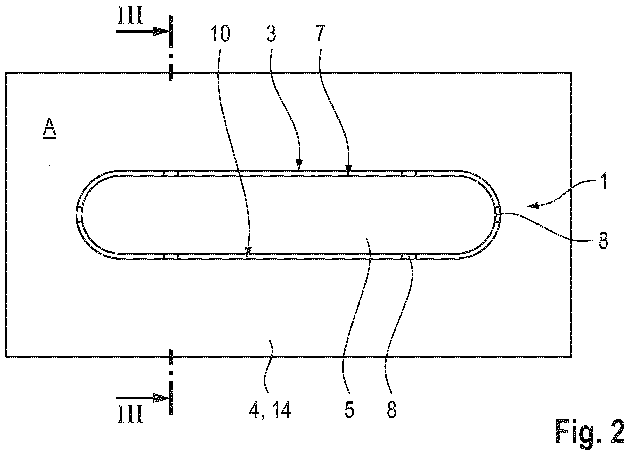

In Fig. 1 ist eine Griffbaugruppe 11 gemäß einer bevorzugten Ausführungsform der Erfindung schematisch in einer perspektivischen Ansicht dargestellt. Fig. 2 zeigt die Griffbaugruppe 11 aus Fig. 1 schematisch in einer Frontalansicht von einer Fahrzeugtüraußenseite A. Die Griffbaugruppe 11 weist ein erstes Bauteil 2 und eine Ausrichtvorrichtung 1 auf. Das erste Bauteil 2 weist eine Türgriffmechanik 13 mit einem daran angeordneten Türgriff 12 (vgl. Fig. 2) auf, welcher in dieser Ansicht durch einen Grundkörper 5 der Ausrichtvorrichtung 1 verdeckt ist. Die Türgriffmechanik 13 ist von einer Fahrzeugtürinnenseite I derart an eine als zweites Bauteil 4 ausgebildete Fahrzeugtür 14 herangeführt, dass der Türgriff 12 von der Fahrzeugtürinnenseite I in eine Ausnehmung 3 der Fahrzeugtür 14 ragt. Der Grundkörper 5 der Ausrichtvorrichtung 1 ist von einer Fahrzeugtüraußenseite A derart zum Türgriff 12 bewegt, dass eine in dieser Ansicht verdeckte Grundkörperinnenseite 6 in die Ausnehmung 3 ragt und dabei den Türgriff 12 formschlüssig umfasst.

An einer Grundkörperaußenseite 7 des Grundkörpers 5 sind mehrere Zentriervorrichtungen 8 gleichmäßig verteilt angeordnet, sodass an sämtlichen Seitenflächen der Grundkörperaußenseite 7, welche einer Ausnehmungsinnenseite 10 der Ausnehmung 3 zugewandt sind, jeweils mindestens eine Zentriervorrichtung 8 angeordnet ist. Auf einer der Türgriffmechanik 13 zugewandten Seite weisen die Zentriervorrichtungen 8 eine als Fase ausgebildete Zentriergeometrie 9 auf, wobei eine Spitze der Fase an der Grundkörperaußenseite 7 anliegt bzw. in die Grundkörperaußenseite 7 verläuft. Die Ausrichtvorrichtung 1 ist derart an dem Türgriff 12 angeordnet, dass sämtliche Zentriervorrichtungen 8 die Ausnehmungsinnenseite 10 kontaktieren und somit den Türgriff 12 zur Fahrzeugtür 14 ausrichten. Somit ist zwischen der Grundkörperaußenseite 7 und der Ausnehmungsinnenseite 10 ein Spalt mit konstanter Spaltbreite ausgebildet. In diesem Zustand ist die Türgriffmechanik 13 an der Fahrzeugtür 14 fixierbar.

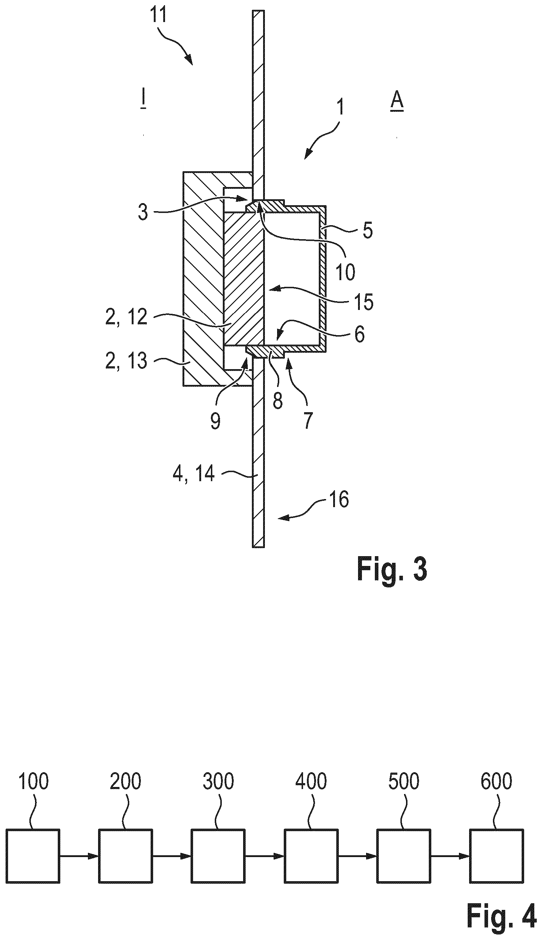

In Fig. 3 ist die Griffbaugruppe 11 aus Fig. 2 schematisch in einer Schnittdarstellung abgebildet. In dieser Ansicht ist deutlich erkennbar, dass ein der Türgriffmechanik 13 abgewandter Bereich des Türgriffs 12 in die Ausnehmung 3 ragt und auf der Fahrzeugtüraußenseite A bündig mit einer Außenfläche 16 der Fahrzeugtür 14 abschließt. Eine weitere Bewegung des Türgriffs 12 in Richtung der Fahrzeugtüraußenseite A ist vorzugsweise durch die Türgriffmechanik 13 im Zusammenspiel mit der Fahrzeugtür 14 auf der Fahrzeugtürinnenseite I formschlüssig verhindert. Ferner ist in dieser Ansicht gut erkennbar, dass die Zentriergeometrien 9 der Zentriervorrichtungen 8 in die Ausnehmung 3 hineinragen und an der Ausnehmungsinnenseite 10 anliegen, sodass der Türgriff 12 über die Ausrichtvorrichtung 1 relativ zur Ausnehmung 3 ausgerichtet ist.

Fig. 4 zeigt eine bevorzugte Ausführungsform eines erfindungsgemäßen Verfahrens schematisch in einem Ablaufdiagramm. In einer ersten Verfahrensaktion 100 wird eine Fahrzeugtür 14 für ein Kraftfahrzeug bereitgestellt. Die Fahrzeugtür 14 weist auf der Fahrzeugtüraußenseite A eine Außenfläche 16 auf. In einer Wandung der Fahrzeugtür 14 ist eine Ausnehmung 3 für einen Türgriff 12 ausgebildet. Die Ausnehmung 3 erstreckt sich von einer Fahrzeugtürinnenseite I zur Fahrzeugtüraußenseite A.

In einer zweiten Verfahrensaktion 200 wird eine Türgriffmechanik 13 von der Fahrzeugtürinnenseite I derart an die Fahrzeugtür 14 heranbewegt, dass die
Türgriffmechanik 13 bzw. ein Gehäuse der Türgriffmechanik 13 die Fahrzeugtür 14 kontaktiert, sodass ein weiteres Heranbewegen der Türgriffmechanik 13 an die Fahrzeugtür 14 formschlüssig verhindert ist. An der Türgriffmechanik 13 ist ein Türgriff 12 gehalten, welcher beim Heranbewegen von der Fahrzeugtürinnenseite I in die Ausnehmung 3 ragt und nach dem Heranbewegen bündig mit der Außenfläche 16 der Fahrzeugtür 14 abschließt. Die Türgriffmechanik 13 kann beispielsweise über Clipse gegen ein Abfallen von der
Fahrzeugtür 14 gesichert werden. Die Clipse weisen vorzugsweise ein derartiges Spiel auf, dass der Ausrichtvorgang weiterhin durchführbar ist.

In einer dritten Verfahrensaktion 300 wird eine erfindungsgemäße Ausrichtvorrichtung 1 von der Fahrzeugtüraußenseite A derart in die Ausnehmung 3 bewegt, dass eine Grundkörperinnenseite 6 eines Grundkörpers 5 der Ausrichtvorrichtung 1 einen zur Fahrzeugtüraußenseite A weisenden Endbereich des Türgriffs 12 umgibt und umfänglich derart kontaktiert, dass ein seitliches Wegbewegen der Ausrichtvorrichtung 1 vom Türgriff 12 formschlüssig verhindert ist. In diesem Zustand ist ein zur Fahrzeugtürinnenseite I weisender Endbereich des Grundkörpers 5 innerhalb der Ausnehmung 3 angeordnet.

In einer vierten Verfahrensaktion 400 wird der Grundkörper 5 der Ausrichtvorrichtung 1 weiter auf den Türgriff 12 aufgeschoben. Hierbei geraten die Zentriergeometrien 9 der Zentriervorrichtungen 8 mit der Ausnehmungsinnenseite 10 der Ausnehmung 3 in Eingriff, sodass der Türgriff 12 mit der Türgriffmechanik 13 zur Fahrzeugtür 14 ausgerichtet wird.

In einer fünften Verfahrensaktion 500 wird die Türgriffmechanik 13 bzw. ein Gehäuse der Türgriffmechanik 13 auf der Fahrzeugtürinnenseite I an der Fahrzeugtür 14 befestigt. Somit ist eine relative Position der Türgriffmechanik 13 zur Fahrzeugtür 14 in einem ausgerichteten Zustand festgesetzt, in welchem zwischen dem Türgriff 12 und der Ausnehmungsinnenseite 10 ein vordefinierter Spalt ausgebildet ist. In einer sechsten Verfahrensaktion 600 wird die Ausrichtvorrichtung 1 von der Fahrzeugtürinnenseite I weg über die Fahrzeugtüraußenseite A vom Türgriff 12 abgezogen.

### Bezugszeichenliste

- 1: Ausrichtvorrichtung
- 2: erstes Bauteil
- 3: Ausnehmung
- 4: zweites Bauteil
- 5: Grundkörper
- 6: Grundkörperinnenseite
- 7: Grundkörperaußenseite
- 8: Zentriervorrichtung
- 9: Zentriergeometrie
- 10: Ausnehmungsinnenseite
- 11: Griffbaugruppe
- 12: Türgriff
- 13: Türgriffmechanik
- 14: Fahrzeugtür
- 15: Griffaußenseite
- 16: Außenfläche

- 100: erste Verfahrensaktion
- 200: zweite Verfahrensaktion
- 300: dritte Verfahrensaktion
- 400: vierte Verfahrensaktion
- 500: fünfte Verfahrensaktion
- 600: sechste Verfahrensaktion

- A: Fahrzeugtüraußenseite
- I: Fahrzeugtürinnenseite

## Patentansprüche

1. Ausrichtvorrichtung (1) zum Ausrichten eines ersten Bauteils (2) in einer Ausnehmung (3) eines zweiten Bauteils (4) eines Kraftfahrzeugs, aufweisend einen Grundkörper (5) mit einer Grundkörperinnenseite (6) zum formschlüssigen Umfassen eines Abschnitts des ersten Bauteils (2) und einer Grundkörperaußenseite (7),
**dadurch gekennzeichnet,**
**dass** an der Grundkörperaußenseite (7) mehrere Zentriervorrichtungen (8) angeordnet sind, wobei die Zentriervorrichtungen (8) eine Zentriergeometrie (9) zum derartigen Kontaktieren einer Ausnehmungsinnenseite (10) der Ausnehmung (3) aufweisen und
**dass** durch ein lineares Aufschieben der Ausrichtvorrichtung (1) auf das erste Bauteil (2) über die Zentriervorrichtungen (8) eine Relativbewegung zwischen dem ersten Bauteil (2) und dem zweiten Bauteil (4) zum Ausrichten des ersten Bauteils (2) zum zweiten Bauteil (4) bewirkbar ist.

2. Ausrichtvorrichtung (1) nach Anspruch 1,
**dadurch gekennzeichnet,**
**dass** die Zentriergeometrie (9) eine Fase und/oder eine Rundung aufweist.

3. Ausrichtvorrichtung (1) nach Anspruch 1 oder 2,
**dadurch gekennzeichnet,**
**dass** die Ausrichtvorrichtung (1) aus einem Kunststoff hergestellt ist.

4. Ausrichtvorrichtung (1) nach einem der vorangegangenen Ansprüche,
**dadurch gekennzeichnet,**
**dass** die Ausrichtvorrichtung (1) als steifes Bauteil ausgebildet ist.

5. Ausrichtvorrichtung (1) nach einem der vorangegangenen Ansprüche,
**dadurch gekennzeichnet,**
**dass** die Zentriervorrichtungen (8) parallel zueinander vom Grundkörper (5) abstehen.

6. Ausrichtvorrichtung (1) nach einem der vorangegangenen Ansprüche,
**dadurch gekennzeichnet,**
**dass** der Grundkörper (5) napfförmig ausgebildet ist.

7. Ausrichtvorrichtung (1) nach einem der vorangegangenen Ansprüche,
**dadurch gekennzeichnet,**
**dass** an dem Grundkörper (5) eine Haltevorrichtung zum Halten der Ausrichtvorrichtung (1) sowie zum Wegziehen der Ausrichtvorrichtung (1) von dem am zweiten Bauteil (4) befestigten ersten Bauteil (2) angeordnet ist.

8. Griffbaugruppe (11) für ein Kraftfahrzeug, aufweisend einen als Teil eines ersten Bauteils (2) ausgebildeten Türgriff (12), wobei der Türgriff (12) an einer Türgriffmechanik (13) des ersten Bauteils (2) bewegbar gehalten ist, wobei der Türgriff (12) zur Anordnung in einer Ausnehmung (3) einer als zweites Bauteil (4) ausgebildeten Fahrzeugtür (14) des Kraftfahrzeugs unter Ausbildung eines umlaufenden Spalts zwischen dem Türgriff (12) und einer Ausnehmungsinnenseite (10) der Ausnehmung (3) ausgebildet ist,
**dadurch gekennzeichnet,**
**dass** die Griffbaugruppe (11) eine Ausrichtvorrichtung (1) nach einem der vorangegangenen Ansprüche aufweist.

9. Griffbaugruppe (11) nach Anspruch 8,
**dadurch gekennzeichnet,**
**dass** der Türgriff (12) und die Fahrzeugtür (14) derart ausgebildet sind, dass eine Griffaußenseite (15) des Türgriffs (12) im eingebauten Zustand fluchtend zu einer Außenfläche (16) der Fahrzeugtür (14) angeordnet ist.

10. Verfahren zum Montieren eines Türgriffs (12) an einer Fahrzeugtür (14) für ein Kraftfahrzeug, aufweisend:
- Bereitstellen einer Fahrzeugtür (14) mit einer Ausnehmung (3) für den Türgriff (12),
- Heranbewegen einer Türgriffmechanik (13) mit dem an der Türgriffmechanik (13) gehaltenen Türgriff (12) von einer Fahrzeugtürinnenseite (I) der Fahrzeugtür (14) zur Ausnehmung (3) derart, dass der Türgriff (12) in die Ausnehmung (3) ragt,
- Heranbewegen einer Ausrichtvorrichtung (1) nach einem der Ansprüche 1 bis 7 von einer Fahrzeugtüraußenseite (A) der Fahrzeugtür (14) zum Türgriff (12) derart, dass die Ausrichtvorrichtung (1) den Türgriff (12) umfasst,
- weiteres Heranbewegen der Ausrichtvorrichtung (1) zum Türgriff (12) derart, dass die Zentriergeometrien (9) der Zentriervorrichtungen (8) den Türgriff (12) zur Fahrzeugtür (14) ausrichten,
- Befestigen der Türgriffmechanik (13) an der Fahrzeugtür (14), und
- Entfernen der Ausrichtvorrichtung (1) über die Fahrzeugtüraußenseite (A) der Fahrzeugtür (14).
